# EUROPÄISCHE PATENTSCHRIFT

(11) **EP 3 647 108 B1**
(45) Veröffentlichungstag und Bekanntmachung des Hinweises auf die Patenterteilung: **28.08.2024**
(21) Anmeldenummer: 19207075.3
(22) Anmeldetag: 05.11.2019
(51) Int. Cl.: B60L 53/51, B60L 53/52, B60L 55/00, H02J 7/02, H02J 3/32, H02J 50/12

(54) **LADEANORDNUNG FÜR KRAFTFAHRZEUGE MIT MEHREREN ENERGIEQUELLEN**
CHARGING ASSEMBLY FOR MOTOR VEHICLES WITH MULTIPLE ENERGY SOURCES
SYSTÈME DE CHARGE POUR VÉHICULES AUTOMOBILES DOTÉ D'UNE PLURALITÉ DE SOURCES D'ÉNERGIE

(30) Priorität: 05.11.2018 DE 102018127549
(43) Veröffentlichungstag der Anmeldung: 06.05.2020
(73) Patentinhaber: Zollner Elektronik AG, 93499 Zandt (DE)
(72) Erfinder: Jetz, Markus, 94264 Langdorf (DE)
(74) Vertreter: Hannke Bittner & Partner mbB Regensburg

(56) Entgegenhaltungen:
- DE-A1- 102010 062 362
- DE-A1- 102015 111 553
- US-A1- 2011 291 606
- US-A1- 2014 097 669
- US-A1- 2016 176 305
- US-A1- 2018 141 443
- LOEWEL THOMAS ET AL: "Identification and positioning system for inductive charging systems", 2013 3RD INTERNATIONAL ELECTRIC DRIVES PRODUCTION CONFERENCE (EDPC), IEEE, 29 October 2013 (2013-10-29), pages 1 - 5, XP032534830, ISBN: 978-1-4799-1102-8, [retrieved on 20131219], DOI: 10.1109/EDPC.2013.6689751

## Beschreibung

Die vorliegende Erfindung bezieht sich auf eine Ladeanordnung für Kraftfahrzeuge. In jüngerer Zeit sind Kraftfahrzeuge mit Hybrid- oder insbesondere auch elektrischem Antrieb bekannt geworden. Diese Fahrzeuge erfreuen sich einer zunehmenden Beliebtheit.

Eine wesentliche Problematik beim Betrieb von elektrischen Kraftfahrzeugen ist das Laden deren Batterien. Zu diesem Zweck ist es aus dem Stand der Technik seit Langem bekannt, dass diese nicht nur an "Tankstellen" geladen werden können, sondern auch zu Hause, wo sie beispielsweise an herkömmliche Stromnetze angeschlossen werden können.

Derartige Ladeanordnungen sind dabei beispielsweise aus DE 10 2015 111 553 A1, US 2016/176305 A1, US 2014/097669 A1, DE 10 2010 062 362 A1 und US 2011/291606 A1 bekannt.

Dabei wird es auch gewünscht, dass auch dieses Laden am Haushaltsnetz effizient und so kostengünstig wie möglich abläuft.

Der vorliegenden Erfindung liegt daher die Aufgabe zugrunde, eine Ladeanordnung für Kraftfahrzeuge zur Verfügung zu stellen, welche ein besonders ökonomisches Laden der Kraftfahrzeuge ermöglicht. Bevorzugt soll auch eine Rückspeisemöglichkeit in das jeweilige Haushaltsnetz geschaffen werden, um so die zur Verfügung stehenden Energiequellen effizient zu nutzen.

Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Ladeanordnung für Kraftfahrzeuge weist eine erste Energiequelle auf, bei der es sich insbesondere um ein Stromnetz handelt. Weiterhin weist die Ladeanordnung eine erste Ladeeinrichtung auf, welche mit dem zu ladenden Fahrzeug verbindbar ist, um dieses elektrisch zu Laden, wobei wenigstens zeitweise ein elektrischer Stromfluss von dem Stromnetz zu der Ladeeinrichtung möglich ist und wobei die Ladeanordnung weiterhin eine Umrichtereinheit und/oder eine PFC-Einheit aufweist aufweist, welche dazu geeignet und bestimmt ist, eine Gleichspannung in eine Wechselspannung und/oder Wechselspannung in eine Gleichspannung umzurichten.

Erfindungsgemäß weist die Ladeanordnung eine weitere Energiequelle auf, welche dazu geeignet und bestimmt ist, wenigstens zeitweise das Fahrzeug zu laden.

Es wird daher im Rahmen der Erfindung vorgeschlagen, dass insbesondere bei Haus- oder haushaltsgebundenen Systemen die Ladeanordnung nicht nur über den üblichen Netzanschluss an das Stromnetz verfügt, sondern über eine weitere Energiequelle, die ebenfalls zumindest zeitweise dazu in der Lage ist, das Kraftfahrzeug bzw. dessen Batterie zu laden. Bevorzugt ist dabei diese weitere Energiequelle unabhängig vom Stromnetz. Besonders bevorzugt können diese weitere Energiequelle und die erste Energiequelle unabhängig voneinander betrieben werden.

Bei einer weiteren vorteilhaften Ausführungsform weist die Ladeanordnung eine induktive Ladeeinheit auf. So kann die Ladeeinheit eine Sendespule aufweisen, welche mit einer im Kraftfahrzeug angeordneten Spule induktiv koppelbar ist.

Damit kann bevorzugt diese Ladeanordnung induktiv arbeiten. Es wäre jedoch auch möglich, dass die Ladeanordnung kabelgebunden das Kraftfahrzeug lädt.

Erfindungsgemäß weist die weitere Energiequelle einen Solargenerator auf. Bei einer vorteilhaften Ausführungsform weist die weitere Energiequelle einen Windkraftgenerator auf. Es wird daher vorgeschlagen, dass es sich bei der weiteren Energiequelle um eine aus erneuerbaren Energien gespeiste Energiequelle handelt.

Daneben wären auch andere Energiequellen denkbar, wie beispielsweise eine Biogasanlage oder auch Anlagen, welche die Strömungen von Gewässern (etwa von Flüssen oder Bächen) nutzen, um hieraus elektrische Energie zu erzeugen.

Erfindungsgemäß handelt es sich bei der Energiequelle um eine Solarenergiequelle.

Erfindungsgemäß steht die weitere Energiequelle zumindest teilweise in elektrischer Verbindung mit der Umrichtereinheit, um so ein Wechselrichten der von der Energiequelle abgegeben Spannung zu ermöglichen. Eine entsprechende Ladeanordnung weist üblicherweise systembedingt Umrichter, beispielsweise Wechselrichter auf. Auch Solaranlagen weisen üblicherweise derartige Wechselrichter auf. Erfindungsgemäß wird daher vorgeschlagen, den Wechselrichter, der für Solaranlagen benötigt wird, auch zum Laden des Kraftfahrzeugs und/oder zum Leiten von elektrischen Strömen zwischen dem Kraftfahrzeug und der ersten Energiequelle zu verwenden. So kann der für das System ohnedies nötige Wechselrichter auch für das jeweilige Solarelement verwendet werden.

Im Bereich der Solarwechselrichter entstanden im Lauf der Zeit mit steigender Anzahl installierter Geräte mehrere Probleme im elektrischen Versorgungsnetz. Die technischen Komitees und Normengremien erarbeiteten zusammen mit den Herstellern von Solarwechselrichtern neue Anforderungen an die Geräte (z.B. VDE-Anwendungsregel 4105). Aufgrund von Problemen der Schieflast und Spannungsanhebung verursacht durch das Einspeisen von elektrischer Energie in das Versorgungsnetz, sowie der allgemein bekannten 50,2 Hz Problematik (bei einer Frequenz von 50,2 Hz stellten Solaranlagen teilweise ihre Produktion ein). Daher wurden die Hersteller dazu verpflichtet, mit den Geräten Funktionen bereitzustellen, welche diese Probleme vermeiden oder sogar reduzieren. Speziell die Problematik der Spannungsanhebung ist hier von erhöhter Bedeutung.

Da die Netzimpedanz stark ausgeprägt ohmschen Charakter aufweist, hebt eine Wirkleistungsquelle am Einspeisepunkt die Netzspannung an. Je größer die eingespeiste Wirkleistung ist, desto größer ist die Spannungsanhebung. Viele relativ leistungsschwache Solarwechselrichter können am Ortsnetztransformator zu einer kritischen Anhebung der Spannung führen.

Es gibt jedoch andererseits eine vorgeschriebene obere und untere Spannungsgrenze, welche nicht über- bzw. unterschritten werden darf. Dies kann zum Beispiel dazu führen, dass der Solarwechselrichter die eingespeiste Wirkleistung reduzieren muss, um die Spannung am Einspeisepunkt unterhalb der oberen Spannungsgrenze zu halten, obwohl dem Solargenerator mehr Wirkleistung entnommen werden könnte.

Damit kann ein Teil der eigentlich verfügbaren elektrischen Energie vom Solargenerator nicht genutzt werden. Dies führt zu Vergütungsverlusten bei den Betreibern der Photovoltaikanlagen und zu einer schlechten Ausnutzung der bestehenden Wechselrichterhardware. Das Problem kann zumindest teilweise behoben werden, indem der Solarwechselrichter neben der Wirkleistung auch Blindleistung zur Verfügung stellt.

Nichtlineare Verbraucher, wie beispielsweise Gleichrichterschaltungen für Ladegeräte für Elektrofahrzeuge müssen in Abhängigkeit der Stromaufnahme aus dem Versorgungsnetz je Leiter die Grenzwerte für Stromoberschwingungen gemäß DIN EN61000-3-2 für Ströme ≤ 16 A, und gemäß EN 61000-3-12 für Ströme > 16 A ≤ 75 A erfüllen. Um diese Grenzwerte zu erreichen, werden zum Beispiel aktive Leistungsfaktorkorrekturschaltungen (Power factor correction circuit) in folgenden PFC-Schaltungen genannt eingesetzt. Diese PFC-Schaltungen stellen eine annähernd sinusförmige Stromaufnahme aus dem Netz sicher, wobei hier ein Leistungsfaktor von über 0,99 gewährleistet werden kann. Damit wird aus dem nicht linearen Verbraucher aus der "Sicht des Versorgungsnetzes" praktisch ein linearer und ohmscher Verbraucher.

Mit dem zunehmenden Ausbau der Elektromobilität nimmt die Anzahl der elektrischen Verbraucher, wie zum Beispiel Ladegeräte für Elektrofahrzeuge rapide zu. Wegen der dadurch zu erwartenden hohen Spitzenbelastung bei der Leistungsaufnahme aus dem Stromversorgungsnetz werden die Akkus der Elektrofahrzeuge selbst als Möglichkeit gesehen, um kurzzeitige Netzschwankungen durch eine Rückspeisung der im Akku gespeicherten elektrischen Energie in das Versorgungsnetz auszugleichen.

Um dies technisch zu ermöglichen, wird bevorzugt die PFC-Schaltung derart ausgeführt, dass ein Rückspeisebetrieb möglich ist. Bevorzugt kann die PFC-Schaltung daher auch als Inverter arbeiten und/oder eingesetzt werden.

Bevorzugt sind die PFC-Einheit und die Umrichtereinheit gemeinsam ausgeführt. Dies bedeutet, dass bevorzugt eine Einheit bzw. eine Hardware vorgesehen ist, welche sowohl die Funktion der PFC-Einheit als auch die Funktion der Umrichtereinheit wahrnimmt.

Weiterhin weist die Ladeanordnung eine Einspeiseeinrichtung auf, welche es ermöglicht, dass die weitere Energiequelle Energie in die erste Energiequelle also insbesondere in das elektrische Netz einspeist. Diese Funktion kann dabei bevorzugt durch die rückspeisefähige PFC wahrgenommen werden.

Die oben beschriebene Problematik beim Einspeisen von elektrischer Energie in das Versorgungsnetz mit Solarwechselrichtern mit der verbundenen Anhebung der Netzspannung am Einspeisepunkt liegt umgekehrt auch vor, wenn elektrische Energie aus dem Versorgungsnetz bezogen wird. Wenn also zum Beispiel eine hohe Anzahl von Ladegeräten für Elektrofahrzeuge gleichzeitig Wirkleistung aus dem Versorgungsnetz beziehen, wird aufgrund des ohmschen Charakters der Netzimpedanz die Netzspannung am Bezugspunkt (zum Beispiel Ortsnetztrafo) sinken. Sinkt die Spannung bis an die untere Spannungsgrenze ab, müssen die Ladegeräte die Ladeleistung reduzieren, um die Spannungsgrenze nicht zu unterschreiten. Die führt zu längeren Ladezeiten für die Elektrofahrzeuge und zu einer schlechten Ausnutzung der bestehenden Ladegeräte - Hardware.

Teilweise kann dieses Problem in ähnlicher Weise wie bei einem Solarwechselrichter durch das Erzeugen von Blindleistung kompensiert werden. Eine Möglichkeit hierfür ist eine blindleistungsfähige bzw. rückspeisefähige PFC-Schaltung, welche den elektrischen Energiefluss in beide Richtungen ermöglicht bzw. ermöglichen muss.

Es ist daher absehbar, dass die Blindleistungs- bzw. Rückspeisefähigkeit eine künftige Anforderung an PFC-Schaltungen für Ladegeräte von Elektrofahrzeugen sein wird.

Erfindungsgemäß wird daher die leistungselektronische Schaltungstopologie, wie zum Beispiel eine B6-Vollbrücke einer rückspeisefähigen PFC-Schaltung, gleichzeitig als Teil eines Solarwechselrichters genutzt.

Bei einer weiteren vorteilhaften Ausführungsform wird ein Ladegerät, welches uni- oder bidirektional ausgeführt sein kann, und welches auch konduktiv oder drahtlos ausgeführt sein kann, gleichzeitig als Solarwechselrichter verwendet.

Diese Funktion ist mit einem vergleichbaren geringen Zusatzaufwand an Hardware abbildbar und birgt deshalb ein hohes Einsparpotenzial in Bezug auf Materialaufwand, Fertigungsaufwand, Installationsaufwand, Wartungsaufwand, Recyclingaufwand und schließlich Kostenaufwand.

Es wird daher bevorzugt die Nutzung dieses Systems auch als Solarwechselrichter und als Element der Ladeanordnung verwendet.

Da bei einer solchen Ausgestaltung der herkömmliche zusätzliche erforderliche Solarwechselrichter entfällt, kann auch der am Installationsort benötigte Platzbedarf reduziert werden. Die Ausnutzung der Hardware kann darüber hinaus deutlich gesteigert werden, da große Teile der Hardware über längere Zeitspannen, beispielsweise sogar rund um die Uhr genutzt werden können.

Bei einer weiteren vorteilhaften Ausführungsform steht daher die oben genannte Energiequelle zumindest teilweise in elektrischer Verbindung mit der Umrichtereinheit, insbesondere um so die Netzeinspeisung der von der Energiequelle abgegebenen elektrischen Leistung zu ermöglichen. Daher kann auch ein für das System benötigter Wechselrichter für das Solarelement genutzt werden.

Dabei ist es denkbar, dass insbesondere am Tag der Wechselrichter mit der elektrischen Energie vom z. B. Solargenerator zur Versorgung des Haushalts, zur Rückspeisung in das Versorgungsnetz, oder zum Laden des Kraftfahrzeuges genutzt werden kann und nachts eventuell für eine Rückspeisung aus dem Kraftfahrzeug oder zum Betreiben der Ladeeinrichtung für das Kraftfahrzeug.

Bei einer weiteren bevorzugten Ausführungsform weist die Ladeanordnung einen elektrischen Abnehmer auf. Insbesondere weist die Ladeanordnung zusätzlich zu der KFZ-Batterie einen elektrischen Abnehmer auf. Dabei kann es sich insbesondere um Geräte eines Haushalts oder dergleichen handeln. Bei einer weiteren vorteilhaften Ausführungsform steht die Umrichtereinheit wenigstens zeitweise auch in elektrischer Verbindung mit dem Stromnetz, um eine Rückspeisung von elektrischer Energie von der weiteren Energiequelle und/oder von dem Kraftfahrzeug in das Stromnetz zu ermöglichen. Dabei kann auch eine permanente elektrische Verbindung zwischen der Umrichtereinheit und dem Stromnetz vorhanden sein.

Bei einer weiteren vorteilhaften Ausführungsform weist die Ladeanordnung eine Umrichtereinheit auf, welche dazu geeignet und bestimmt ist, Wechselspannung in Gleichspannung umzurichten.

Wie oben erwähnt, weist die Ladeanordnung und insbesondere die Umrichtereinheit erfindungsgemäß eine Leistungsfaktorkorrektureinrichtung (PFC) auf. Besonders bevorzugt handelt es sich hierbei um eine rückspeisefähige PFC-Einrichtung. Besonders bevorzugt handelt es sich weiterhin um eine blindleistungsfähige PFC-Schaltung.

Bei einer weiteren vorteilhaften Ausführungsform weist die Ladeanordnung eine Steuerungseinrichtung auf, welche Ströme zwischen dem Kraftfahrzeug, dem Stromnetz und dem Abnehmer und der weiteren Energiequelle steuert und/oder regelt. So ist es beispielsweise möglich, dass eine derartige Steuerung oder Regelung in Abhängigkeit von einer Tageszeit und/oder einer Witterung erfolgt.

Daneben ist es auch möglich, dass die Ströme in Abhängigkeit von einer Benutzervorgabe geregelt werden. So kann beispielsweise ein schnelles Laden gewünscht sein, welches unmittelbar aus dem Stromnetz erfolgt. Auch kann ein Laden gewünscht sein, welches überwiegend mit der gerade verfügbaren Energie aus den Solarzellen lädt, oder auch allgemein bevorzugtes Nutzen der Solarzellen. Bevorzugt ist daher die Steuerungseinrichtung durch einen Benutzer konfigurierbar.

Bei einer bevorzugten Ausführungsform stellt das Ladegerät und/oder die PFC-Schaltung Netzdienstleitung beispielsweise zum Zwecke der Blindleistungskompensation zur Verfügung.

Wie oben erwähnt ist es denkbar, dass die PFC-Schaltung bzw. das Ladegerät für das Kraftfahrzeug zusätzlich als Solarwechselrichter verwendet wird. Auf diese Weise kann sich der Kunde beim Kauf eines Ladegeräts in Verbindung mit einer Photovoltaikanlage einen Wechselrichter einsparen.

Daneben ist bevorzugt auch eine Schaltungseinheit vorgesehen, welche dazu geeignet und bestimmt ist, Asymmetrien im Versorgungsnetz entgegenzuwirken. Dies bedeutet, dass Verbraucher und Lieferanten am Netz in der Lage sind, asymmetrische Ströme zu verursachen.

Bei einer bevorzugten Ausführungsform weist die Ladeanordnung einen N-Leiter auf.

Das netzseitige Frontend kann unterschiedliche Varianten aufweisen. Auch ist es dabei möglich, dass die Ladeanordnung stets für einen festen Netzanschluss ausgelegt ist.

Dabei kann weiterhin eine Steuerungseinrichtung vorgesehen sein, welche nach vorgegebenen Bedingungen eine Steuerung der Lade- oder sonstigen Ströme vornimmt. So kann es beispielsweise bei Unwettern vorkommen, dass eine Sicherung das System abschaltet. In diesem Fall wird das Kraftfahrzeug nicht mehr geladen, was im späteren Betrieb zu Ausfällen führen kann. Es wäre möglich, dass im Falle beispielsweise eines Unwetters und eines Sicherungsausfalls der Solarwechselrichter nicht mehr in das System einspeist.

Bei einer weiteren vorteilhaften Ausführungsform kann die Ladeanordnung auch eine Positionserfassungseinrichtung aufweisen, welche insbesondere im Falle eines induktiven Ladesystems eine Position der Kraftfahrzeugspule gegenüber einer Ladespule erfasst.

Eine LOD (living object detection) Schaltung ist vorteilhaft, wenn die elektromagnetischen Feldstärken die gesetzlich vorgegebenen Grenzwerte übersteigen.

Wenn metallische Gegenstände welche in den Einflussbereich des Wechselfeldes gelangen können eine gefährliche hohe Temperaturentwicklung verursachen, müssen diese Objekte mit Hilfe eines FOD-Systems erkannt (foreign object detection) werden. Welche Objekte im Wechselfeld kritisch aufgeheizt werden und deshalb erkannt werden müssen ist jedoch sehr stark von verschiedenen Parametern wie z. B. der Ladeleistung und der Geometrie und Grö-ße der Spulen, sowie der räumlichen Position der Spulen zueinander, abhängig.

Bei einer weiteren vorteilhaften Ausführungsform weist die Ladeanordnung eine Kühleinrichtung auf, welche die stationären bzw. hausseitigen Komponenten und/oder die fahrzeugseitigen Komponenten kühlt.

Bei einer weiteren vorteilhaften Ausführungsform kann die Steuerungseinrichtung auch eine Rückspeisung von Energie aus dem Kraftfahrzeug in das Haushaltssystem ermöglichen. Bei dieser Ausgestaltung könnte die Fahrzeugbatterie zumindest vorrübergehend als Notstromaggregat wirken, um zumindest bestimmte elektrische Geräte in einem Haushalt betriebsfähig zu halten.

Weiterhin könnte auch eine Anschlusseinrichtung zur Verfügung stehen, um an das Haushaltssystem ein Notstromaggregat, wie insbesondere aber nicht ausschließlich ein brennstoffbetriebenes Notstromaggregat anzuschließen. In dieser Ausgestaltung könnte die Umrichtereinrichtung und/oder die PFC-Schaltung bewirken, dass in einem sog. Inselnetzbetrieb für Haushaltsgeräte verwertbare Spannungen und Ströme zur Verfügung gestellt werden.

Bei einer weiteren vorteilhaften Ausführungsform weist die Ladeanordnung Isolationen auf, welche auch eine Isolation gegenüber hohen Spannungen ermöglichen. Bevorzugt sind Isolationen vorgesehen, die Isolation gegenüber Spannungen von mehr als 200 V, bevorzugt von mehr als 400 V und besonders bevorzugt von mehr 600 V und besonders bevorzugt von mehr als 800 V ermöglichen. Da sich im Bereich der Elektromobilität ein Trend hin zu höheren Batteriespannungen abzeichnet, verwenden bereits zum Teil konduktive und auch induktive Ladegeräte derartige hohe Batteriespannungen.

Bei einer weiteren bevorzugten Ausführungsform sind die Ladeanordnung und insbesondere die Umrichtereinrichtung so ausgeführt, dass wenigstens zwei Betriebsmodi ermöglicht werden. Ein erster Betriebsmodus, in dem Energie von dem Solargenerator in das Netz rückgespeist wird und/oder dem Haushalt zugeführt wird bzw. zum Laden des Kraftfahrzeuges verwendet wird und ein zweiter Betriebsmodus, indem Energie von dem Kraftfahrzeug rückgeführt wird.

Die jeweiligen Bedingungen, welche die verschiedenen Betriebsmodi hervorrufen, können unterschiedlich sein, etwa Benutzervorgaben, Tageszeiten, Stromtarife, Sonneneinstrahlung, Ladezustand der Fahrzeugbatterie, externe Anforderungen des Netzbetreibers und dergleichen.

Daneben kann auch noch ein Betriebsmodus vorgesehen sein, in welchem das Kraftfahrzeug von der ersten Energiequelle geladen wird.

Weitere Vorteile und Ausführungsformen ergeben sich aus den beigefügten Figuren:
Darin zeigen:
- Fig. 1a-c: drei Darstellungen einer Ausführungsform einer erfindungsgemäßen Anordnung;
- Fig. 2a,b: zwei Darstellungen einer Ausführungsform einer erfindungsgemäßen Anordnung;
- Fig. 3: eine weitere Ausführungsform einer Anordnung, welche nicht unter den Schutzbereich der Ansprüche fällt;
- Fig. 4a: eine Situation bei der Energie in das Versorgungsnetz eingespeist wird, welche nicht unter den Schutzbereich der Ansprüche fällt;
- Fig. 4b: eine Situation bei der ein möglichst schnelles Laden der Kraftfahrzeug-Batterie erfolgen soll, welche nicht unter den Schutzbereich der Ansprüche fällt;
- Fig. 4c: eine Situation mit angepasster Ladeleistung, welche nicht unter den Schutzbereich der Ansprüche fällt;
- Fig. 4d: eine Situation bei der das Fahrzeug Energie rückspeist, welche nicht unter den Schutzbereich der Ansprüche fällt;
- Fig. 5a-c: drei weitere Darstellungen von Ausführungsformen für konduktive Ladeanordnungen, welche nicht unter den Schutzbereich der Ansprüche fallen; und
- Fig. 6a, b: zwei Ausgestaltungen für induktive Ladeanordnungen, welche nicht unter den Schutzbereich der Ansprüche fallen.

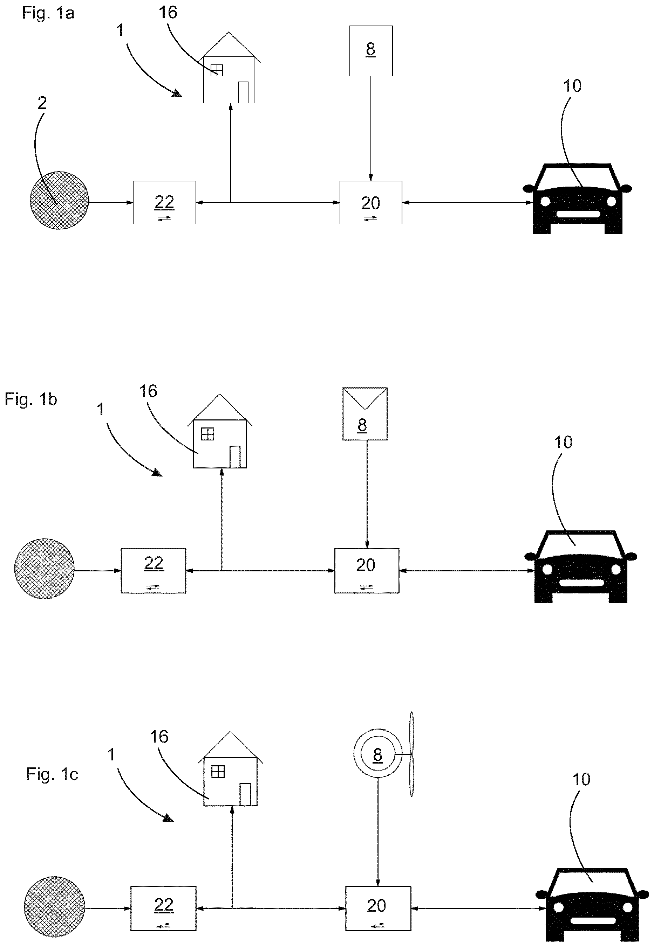

Die Figuren 1a - 1c zeigen drei Darstellungen einer erfindungsgemäßen Anordnung.

Fig. 1a zeigt eine allgemeine Darstellung. Es gibt eine Energiequelle 2 wie ein (öffentliches) Stromversorgungsnetz, welches über einen bidirektionalen Energiezähler 22 mit verschiedenen elektrischen Verbrauchern bzw. Erzeugern verbunden ist. Dabei sind elektrische Verbraucher 16 (wie etwa Haushaltsgeräte) vorhanden, welche direkt nach dem Energiezähler 22 mit dem Netz 2 verbunden sind.

Weiterhin ist eine Funktionseinheit 20 vorgesehen, die sowohl mit dem Netz 2 als auch mit einem Generator 8 (dieser Begriff wird hier verallgemeinernd für eine Energie erzeugende Einrichtung verwendet) und einem Elektrofahrzeug 10 verbunden ist. Diese Funktionseinheit 20 kann in unterschiedlichen Ausbaustufen unterschiedliche Aufgaben übernehmen und bildet die zentrale Einheit für das elektrische Energiemanagement zwischen Verbrauchern und Erzeugern.

Als Verbraucher können sowohl alle im Haushalt angeschlossenen Elektrogeräte, welche keine elektrische Energie zurückspeisen, als auch die Fahrzeugbatterie während des Ladevorgangs, angesehen werden. Sowohl der Generator 8, und bei einem rückspeisefähigen Ladesystem auch die Fahrzeugbatterie 10 während des Entladevorgangs, können als Erzeuger angesehen werden.

Bei der in Fig. 1b gezeigten Situation handelt es sich bei dem Generator um einen Solargenerator und bei der in Fig. 1c gezeigten Situation handelt es sich bei dem Generator um einen Windkraftgenerator. Auch wäre es möglich, dass die Anordnung sowohl einen Solargenerator als auch einen Windkraftgenerator aufweist.

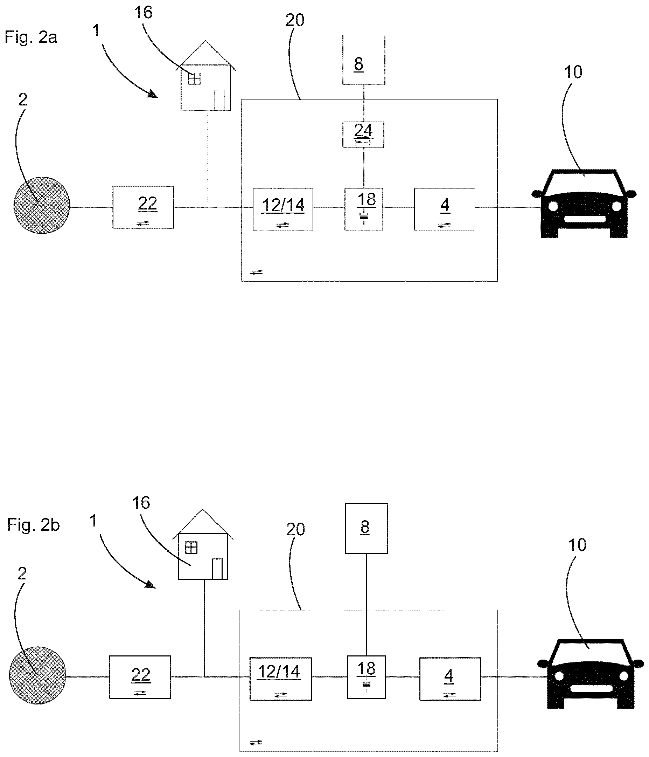

Fig. 2a zeigt eine Darstellung, bei der insbesondere die Funktionseinheit 20 genauer erläutert ist.

Der Block mit der PFC-Einheit 14 und dem Umrichter bzw. Inverter 12 hat eine AC-Seite, welche an dem gemeinsamen Knoten angeschlossen ist, an dem die im Haushalt üblichen elektrischen Verbraucher 16 und der Energiezähler 22 angeschlossen sind.

An der DC-Seite ist erfindungsgemäß ein Zwischenkreiskondensator 18 angeschlossen. Im Gleichrichter- oder PFC-Betrieb wird der Zwischenkreis von dem Block 12, 14 mit pulsierendem Gleichstrom geladen. Im Wechselrichter- oder Inverter-Betrieb wird der Zwischenkreis (bulk) 18 vom Block 12, 14 mit pulsierendem Gleichstrom entladen.

Der Gleichrichter- oder PFC-Betrieb liegt vor, wenn das Fahrzeug aus der Energiequelle 2 geladen wird. Ist ein Solargenerator angeschlossen, ist es denkbar durch ein Einspeisen von elektrischer Energie in den Solargenerator die Photovoltaik-Zellen zu heizen. Diese Funktion erfordert die Rückspeisefähigkeit des DC/DC-Converters welcher für die MPP(Maximum Power Point)-Regelung des Solargenerators vorgesehen ist.

So kann eine Befreiung der Solaranlage von Schnee und Eis im Winter erreicht werden. Dieser Zweck kann ebenfalls den Gleichrichter- oder PFC-Betrieb des Blockes "PFC/Inverter" erfordern.

Die Anordnung nach Fig. 2a erlaubt einen Betrieb mit konstanter Zwischenkreisspannung. Da die konstante Zwischenkreisspannung erfindungsgemäß die Eingangsspannung für den Charger, d.h. die Ladeneinrichtung 4, darstellt, ist die Dimensionierung der Charger-Schaltung einfacher und kostengünstiger, da die Eingangseckleistung (Peck_in = Uin*lin_max) der maximalen Eingangsleistung (Pin_max = Uin*lin_max) entspricht und eine Überdimensionierung nicht erforderlich macht.

Auch die Schaltungstechnik des PFC/Inverter Blocks 12, 14 und deren Dimensionierung kann einfacher und kostengünstiger ausgeführt werden, wenn auf einer konstanten (hohen) Zwischenkreisspannung gearbeitet wird. Die Zwischenkreisspannung ist die Ausgangsspannung der PFC. Ist diese Spannung konstant, resultiert daraus, dass die Ausgangseckleistung der maximalen Ausgangsleistung entspricht und eine Überdimensionierung vermieden werden kann.

Zur Realisierung der Funktion PFC/Inverter können vorteilhaft z. B. übliche aktive Brückenschaltungen (B6) verwendet werden. Eine konstante und hohe Zwischenkreisspannung erlaubt weiterhin eine minimale und kostengünstige Dimensionierung des Zwischenkreiskondensators 18.

Die genannten Vorteile werden mit dem erforderlichen DC/DC-Converter für die MPP-Regelung erkauft. Dieser DC/DC-Converter ist im einfachsten Fall als Hochsetzsteller realisiert.

Fig. 2b zeigt eine Ausgestaltung der erfindungsgemäßen Anordnung. Wird in Fig. 2a der DC/DC-Converter 24 für die MPP-Regelung des Generators weggelassen, ergibt sich die in Fig. 2b erfindungsgemäße Situation.

Erfindungsgemäß muss, um die in der Regel unverzichtbare MPP-Regelung des Generators zu gewährleisten, hier mit variabler Zwischenkreisspannung gearbeitet werden. Dadurch steigen die erforderlichen Ein- bzw. Ausgangseckleistungen von PFC/Inverter (12, 14) und Charger (Ladeeinrichtung 4).

Eine Überdimensionierung der Schaltungen wird so erforderlich. Auch sollte der Zwischenkreiskondensator hinsichtlich Kapazität und Rippelstrom größer dimensioniert werden, was zusätzlichen Material und damit Kostenaufwand bringt.

Wird der für die MPP-Regelung des Generators erforderliche Bereich der variablen Zwischenkreisspannung zu groß, kann es erforderlich sein, für die PFC/Inverter- bzw. Charger-Schaltungen komplexere z. B. Buck-Boost fähige Schaltungstopologien zu wählen.

Ist der Generator 8 als Solargenerator ausgeführt wird erfindungsgemäß z. B. durch eine Längsdiode ein "Rückfluss" des Stromes aus dem Zwischenkreis in den Generator verhindert. Auch ein Abtrennen des Generators 8 mit Hilfe eines Relaiskontaktes ist denkbar. Diese Gefahr besteht dann, wenn die Zwischenkreisspannung höher ist als die Generatorspannung, was z.B. nachts während des Ladevorgangs des Elektrofahrzeugs möglicherweise der Fall ist.

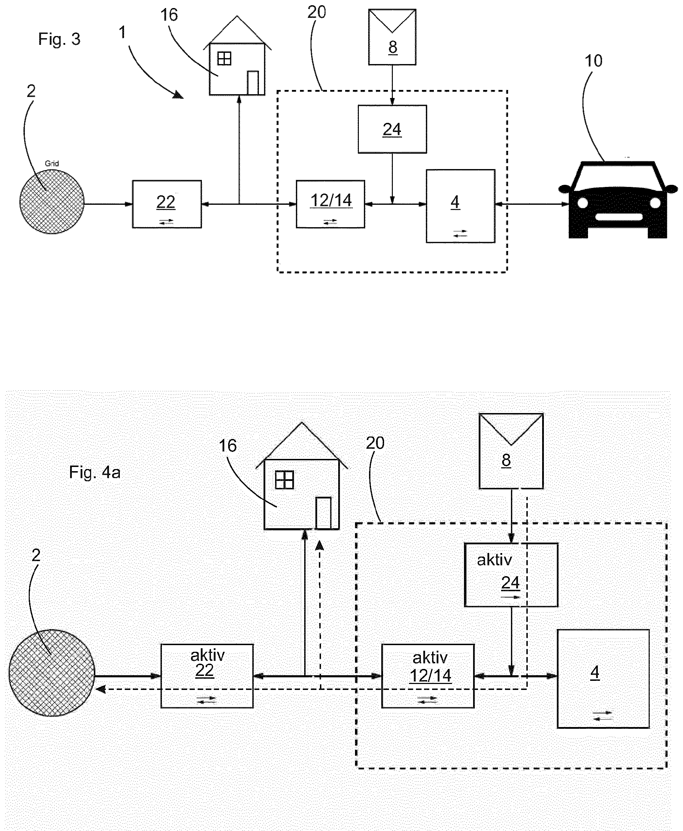

In den Figuren 3 und 4a-d wird der Zwischenkreiskondensator als Teil des PFC/Inverter (12, 14) angesehen und nicht dargestellt.

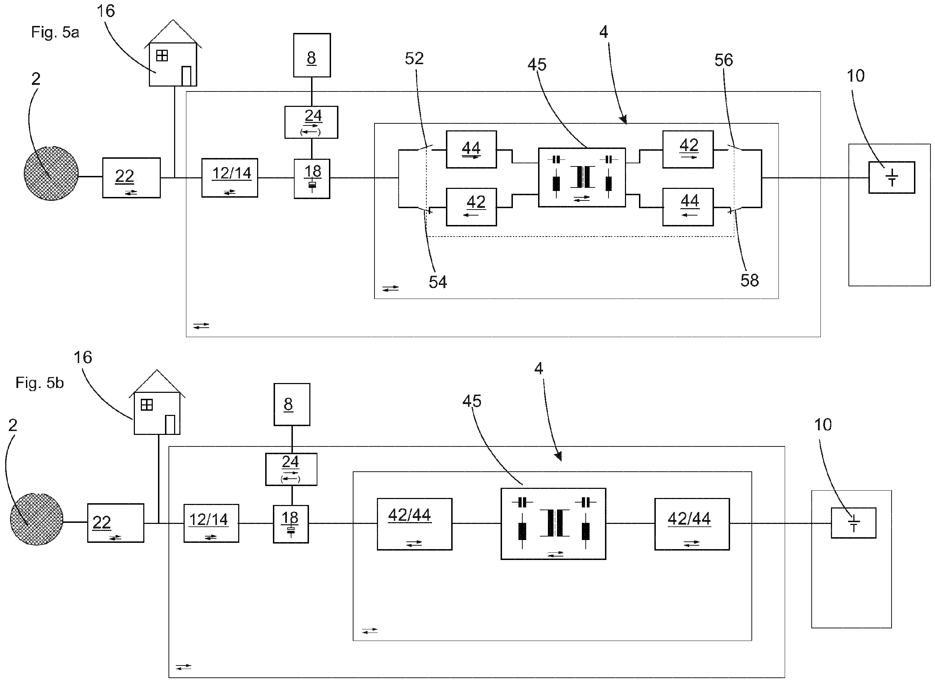

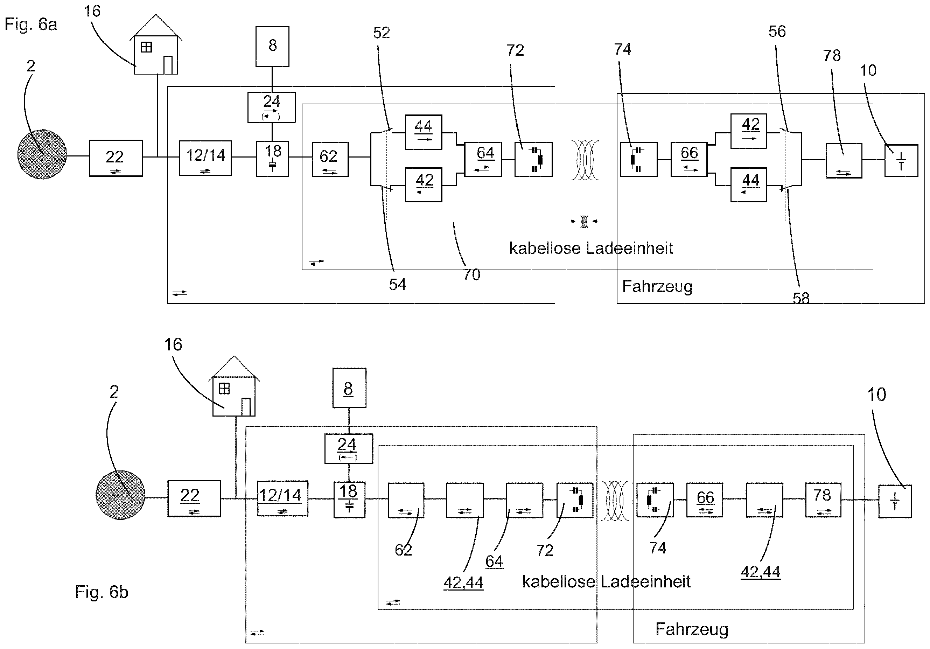

Fig. 3 zeigt eine Anordnung 1 zum Laden eines Fahrzeugs 10 bzw. einer Fahrzeugbatterie an einem elektrischen System eines Haushalts 16. Dieses System weist eine erste Energiequelle 2 hier in Form eines Stromnetzes auf. Diese Energiequelle ist geeignet, das Kraftfahrzeug bzw. dessen Batterie elektrisch zu laden. Zu diesem Zweck weist die Ladeanordnung 1 eine Ladeeinrichtung 4 auf, die dem Kraftfahrzeug die elektrische Energie zuführt, was sowohl kabelgebunden (vgl. Fig. 5a) als auch induktiv und/oder kabellos (vgl. Fig. 6a) erfolgen kann.

Daneben weist die Anordnung eine weitere Energiequelle 8, hier in Form eines Solargenerators auf. Auch dieser Solargenerator ist in der Lage, die Kraftfahrzeugbatterie zu laden. Daneben kann jedoch der Solargenerator auch Energie in das Stromnetz speisen bzw. der ersten Energiequelle 2 zuführen. Bevorzugt erzeugt dieser Solargenerator elektrische Energie in Form von Gleichspannung und Gleichstrom.

Das Bezugszeichen 24 kennzeichnet eine Konvertereinheit, insbesondere einen sog. Hochsetzsteller (Boost-Converter). Es können aber auch Tiefsetzsteller (Buck-Converter) oder Tief-Hochsetzsteller (Buck-Boost-Converter) und auch Steller mit galvanischer Trennung zum Einsatz kommen. Diese Konvertereinheit ermöglicht eine Anpassung der Generatorspannung und der Systemspannung oder Zwischenkreisspannung, welche i. d. R. unterschiedliche Werte aufweisen. Darüber hinaus ermöglicht diese Konvertereinheit eine MPP-Regelung (Maximum-Power-Point-Regelung), welche wiederum erforderlich ist, um den Energieertrag des angeschlossenen Solar- oder Windgenerators zu maximieren. Das Bezugszeichen 12 kennzeichnet eine Umrichtereinheit, welche dazu geeignet ist, eine Gleichspannung (etwa von dem Solargenerator oder aber auch von der Batterie des Fahrzeugs) in eine Wechselspannung bzw. einen Wechselstrom umzurichten.

Das Bezugszeichen 14 bezieht sich dabei auf eine Leistungsfaktorkorrektur (PFC)-Schaltung, die auch gemeinsam mit der Umrichtereinrichtung 12 ausgeführt sein kann. Die beiden Pfeile deuten an, dass elektrische Energie hier in beide Richtungen fließen kann und auch beide Energieflussrichtungen zeitweise Anwendung finden.

Das Bezugszeichen 22 kennzeichnet einen optional vorhandenen Energiezähler. Dieser kann ermitteln, wie viel Energie in das Stromnetz eingespeist wird und/oder wie viel Energie das Haushaltssystem 16 und/oder das Kraftfahrzeug 10 aus dem Stromnetz bezieht.

Bei einem kabelgebundenen Ladesystem können die Umrichtereinheit 12, die PFC-Schaltung 14, der Konverter 24 und die Ladeeinrichtung 4, welche die Funktionseinheit 20 bilden, in einer gemeinsamen baulichen Einheit, etwa einem Wallbox-System integriert sein.

Bei einem induktiven Ladesystem können die Umrichtereinheit 12, die PFC-Schaltung 14, der Konverter 24 und die Ladeeinrichtung 4, welche die Funktionseinheit 20 bilden, in zwei baulichen Einheiten, etwa einem Wallbox-System und einem Bodenspulensystem integriert sein.

Fig. 4a zeigt eine erste Ladesituation der Ladeanordnung: Dabei kann tagsüber und wenn kein Elektrofahrzeug angedockt ist, das System zusammen mit dem Solargenerator arbeiten und elektrische Blind- und Wirkleistung in das Versorgungsnetz einspeisen. In dieser Situation ist die Konvertereinrichtung 24, die Umrichtereinrichtung 12, die PFC-Schaltung 14 und auch der Elektrizitätszähler 22 aktiv. Die gestrichelten Pfeile zeigen die Energieflussrichtung an. Dabei ist es möglich, dass der Haushalt 16 mit seinen Abnehmern (nicht im Einzelnen gezeigt) sowohl von dem Solargenerator 8 als auch aus dem Stromnetz gespeist wird. Daneben kann der Solargenerator auch Energie in das Netz 2 rückspeisen.

Die Umrichtereinrichtung 12 arbeitet hier bevorzugt also Solarwechselrichter, insbesondere wenn kein KFZ angeschlossen ist. Eine Überschussleistung des Solargenerators wird wie erwähnt in das Versorgungsnetz eingespeist.

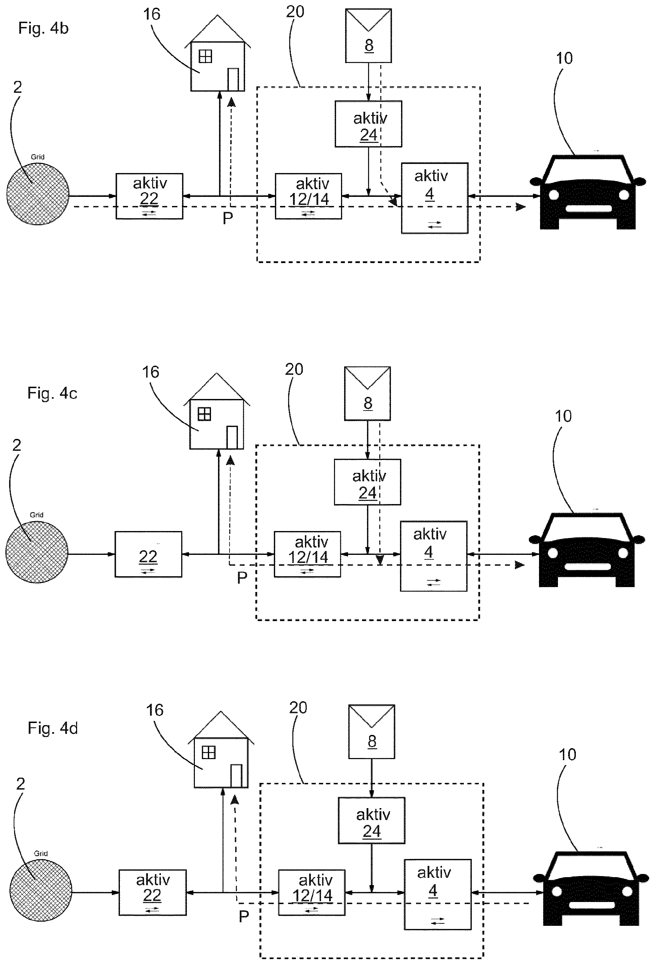

Bei der in Fig. 4b gezeigten Situation ist ein möglichst schnelles Wiederaufladen des Kraftfahrzeugs 10 gewünscht. Das System nimmt keine Rücksicht auf die momentan verfügbare elektrische Leistung des angeschlossenen Solargenerators. Man erkennt, dass hier wiederum die Konvertereinrichtung 24, die Umrichtereinrichtung 12, die PFC-Schaltung 14 und auch der Elektrizitätszähler 22 sowie die Ladeeinrichtung 4 aktiv sind.

Das Kraftfahrzeug wird hier sowohl von dem Solargenerator 8 als auch von dem Netz 2 geladen, es wird jedoch darauf geachtet, dass dem Fahrzeug die maximale Energie zugeführt wird. Daneben wird auch der Haushalt 16 aus dem Netz 2 gespeist. Hier ist die Ladeleistung größer als die von dem Solargenerator 8 erzeugte Leistung und die Umrichtereinheit wird hier auch als PFC-Schaltung betrieben, bzw. die PFC-Schaltung ist aktiv.

Bei der in Fig. 4c gezeigten Situation ist ein ökonomisches Laden und/oder ein Laden mit angepasster Ladeleistung gewünscht. Der Fahrer des Elektrofahrzeuges 10 bzw. der Nutzer der Ladeanordnung möchte möglichst nur die vom angeschlossenen Solargenerator erzeugte Energie zur Ladung des Fahrzeuges verwenden, um z. B. eine Eigenverbrauchsoptimierung zu erreichen.

Dabei wird bevorzugt die Ladeleistung - insbesondere kontinuierlich - angepasst, in Abhängigkeit der Sonneneinstrahlung und des Energiebedarfs z. B. der restlichen im Haushalt angeschlossenen elektrischen Verbraucher. Es kann so eine sogenannte Nullausregelung durchgeführt werden. Dabei wird der Leistungsfluss zwischen den Erzeugern (Solar) und den Verbrauchern (Haus, E-Fahrzeug) so gesteuert, dass weder Energie vom Netz bezogen noch Energie in das Netz gespeist wird.

Es wäre jedoch auch möglich, dass auch in dieser Situation auf Energie aus dem Netz zurückgegriffen wird, insbesondere wenn die durch den Solargenerator 8 bereit gestellte Energie nicht ausreichend ist.

Bei dieser Situation sind die Konvertereinrichtung 24, die Umrichtereinrichtung 12, die PFC-Schaltung 14 sowie die Ladeeinrichtung 4 aktiv.

Bevorzugt erfolgt daher ein Betrieb der Ladeanordnung im Modus der Nullausregelung mit Hilfe der Ladeleistung. Die Leistung des Solargenerators wird zur Fahrzeugladung und Hausversorgung verwendet.

Bei der in Fig. 4d gezeigten Situation ist die Batterie des KFZ vollständig geladen und bleibt am Ladesystem angedockt. Tagsüber und vor allem nachts, kann elektrische Leistung aus der Fahrzeugbatterie entnommen werden, um den Eigenverbrauch der Solaranlage weiter zu erhöhen und das Versorgungsnetz je nach Bedarf zu be- oder entlasten. Die Nullausregelung wird angestrebt. Bei dieser Situation wäre auch eine Rückführung von Energie aus dem Fahrzeug in das Stromnetz möglich.

Bei dieser Situation sind die Umrichtereinrichtung 12, die PFC-Schaltung 14 sowie die Ladeeinrichtung 4 aktiv. Der Solargenerator 8 ist hier inaktiv und der Fahrzeugakku kann den Haushalt 16 versorgen.

Fig. 5a zeigt eine Ladeanordnung insbesondere für die Anwendung mit kabelgebundenen Ladesystemen für ein Kraftfahrzeug 10.

Fig. 5a zeigt damit eine mögliche Ausführung mit einem konduktiven also kabelgebundenen Charger bzw. einer Ladereinrichtung 4. Der DC/DC-Wandler 24 für die MPP-Regelung des Generators 8 ist eingezeichnet, kann aber mit den oben beschriebenen Konsequenzen für die anderen Funktionsblöcke auch entfallen.

Die hier schematisch dargestellte Ausführungsform des kabelgebundenen Chargers 4 verwendet getrennte Inverter 44 (Um- oder Wechselrichter) und Rectifier (Gleichrichter) 42. Die gewählte Betriebsart (Lade- oder Rückspeisebetrieb) bestimmt die Stellung der Schließer- und Öffnerkontakte 52, 54, 56, 58. Diese Kontakte können z. B. Relaiskontakte oder Halbleiterschalter sein.

Im Ladebetrieb ist die Schalterstellung so gewählt, dass der links im Funktionsblock gezeichnete Inverter 44 mit dem Zwischenkreis verbunden ist. Gleichzeitig ist der auf der rechten Seite eingezeichnete Rectifier bzw. Gleichrichter 42 mit der Fahrzeugbatterie 10 verbunden.

Jetzt kann der Inverter 44 auf den Block 45 mit passiven Bauelementen arbeiten. Dieser Block 45 enthält je nach gewählter Schaltungsvariante bevorzugt mindestens einen HF-Transformator und eventuell weitere passive Elemente.

Auf der rechten Seite des Blocks ist der Rectifier (Gleichrichter) 42 angeschlossen, welcher die erzeugten Wechselspannungen- und Ströme in für die Batterieladung erforderliche Gleichspannungen- und Ströme umwandelt.

Weitere passive Elemente wie sie u.U. im Block 45 vorkommen können in Energieflussrichtung auch erst nach dem Gleichrichter 42 verortet sein. Ein Beispiel ist die Speicherdrossel eines Vorwärtswandlers.

Im Rückspeisebetrieb wird der linke Gleichrichter (Rectifier) 42 mit dem Zwischenkreis und der rechte Inverter 44 mit der Fahrzeugbatterie 10 verbunden. Die Funktion ist analog zum Ladebetrieb.

Für diesen "Conductive Charger" kommen z. B. Schaltungstopologien wie LLC-Resonanzwandler, Voll- und Halbbrückenvorwärtswandler, Push-Pull-Wandler neben weiteren bekannten Topologien wie Phase-Shift-Wandler in Frage. Der Freiheitsgrad bei der Wahl der Topologie ist hoch.

Fig. 5b zeigt eine weitere mögliche Schaltungstopologie. Grundsätzlich ist es möglich, die Funktionen des Inverters 44 und des Gleichrichters 42 mit einem einzigen Schaltungsansatz bereitzustellen. Damit wird aus dem "Conductive Charger" aus Fig. 5a der in Fig. 5b schematisch dargestellte Funktionsblock 4.

Der Inverter kann als sog. aktiver Gleichrichter oder Synchrongleichrichter (eng. active rectifier) betrieben werden. Mögliche Schaltungskonzepte sind der DAB-Converter und der LLC-Resonanzwandler.

Es ist auch möglich den Inverter/Rectifier so zu realisieren, dass ein Betrieb wie in Fig. 5a realisiert werden kann, ohne die Notwendigkeit der Umschaltung mit z. B. Relaiskontakten. Dazu müssen die aktiven Halbleiter geeignete Eigenschaften aufweisen, um in Parallelschaltung mit externen geeigneten Dioden zu funktionieren. z. B. SiC-Mosfets in Verbindung mit externen SiC-Schottky Dioden kommen für diese Ausführung in Frage.

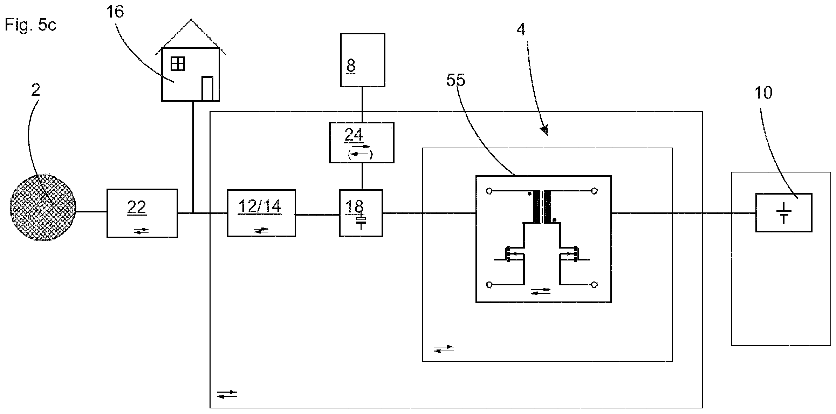

Fig. 5c zeigt eine weitere Darstellung einer Anordnung. Dabei ist die Schaltung des konduktiven Chargers 4 als bidirektionaler Flyback Wandler ausgeführt. Der Flyback Wandler ist im interleaved Betrieb durchaus auch für höhere Übertragungsleistungen geeignet, obwohl dies in der Literatur immer wieder verneint wird. Neue Halbleitertechnologien in Verbindung mit optimierten Trafodesigns erlauben den Einsatz des Flyback Wandlers auch im Kilowatt-Bereich. Der Flyback-Wandler ist von sich aus schon ein Buck-Boost Wandler und würde an dieser Stelle eine variable Zwischenkreisspannung über weite Bereiche ermöglichen.

Fig. 6a zeigt eine Anordnung für einen induktiven Betrieb. Wo bei der kabelgebundenen bidirektionalen Energieübertragung noch praktisch die gesamte Leistungselektronik auf der Infrastrukturseite saß, müssen im Falle der bidirektionalen kabellosen Energieübertragung gro-ße Teile der Leistungselektronik in das Elektrofahrzeug wandern.

Der in Fig. 6a dargestellte Block für eine kabellose Ladeeinheit soll nachfolgend beschrieben werden. Die hier dargestellte Ausführung verwendet DC/DC-Wandler (z. B. Buck-Wandler) 62 und 78, um den Energiefluss und die Lastanpassung für die induktive Energieübertragung zu ermöglichen.

Analog zum konduktiven Charger in Fig. 5a sind hier Inverter 44 und Rectifier 42 getrennt ausgeführt und werden über die schematisch angedeutete Umschalteinheit 52, 54 je nach gewünschter Energieflussrichtung getrennt bzw. verbunden.

Da sich Teile der Umschalteinheit auf der Infrastrukturseite und auf der Fahrzeugseite befinden, muss die benötigte Verbindung über eine Funkverbindung 70 sichergestellt sein.

Der Block 64 kann passive Bauelemente wie Spulen und Kondensatoren enthalten die z. B. Transformationsschaltungen wie Gyratoren realisieren. Es ist denkbar mit diesen Matching-Einheiten die DC/DC-Wandler 62 und 78 für die Lastanpassung zu ersetzen und umgekehrt.

Die Resonatorblöcke 72, 74 beinhalten die Sende- und Empfangsspulen und deren zugehörige Resonanzkondensatoren. Mit Hilfe dieser Resonatoren werden die magnetischen Wechselfelder erzeugt und empfangen, die zur Übertragung der Energie verwendet werden.

Fig. 6b zeigt eine weitere Ausgestaltung der Anordnung. Die Beschreibung der Funktionsblöcke im Block Wireless Charger ist analog zu Fig. 6a. Wie in Fig. 5b beim konduktiven Charger kann auch hier die Funktion der Inverter und Rectifiers mit einem geeigneten Schaltungsansatz realisiert werden. Die Beschreibung dazu gilt analog zu der von Fig. 5b.

Die Anmelderin behält sich, vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Ladeanordung
- 2: erste Energiequelle, Stromnetz
- 4: Ladeeinrichtung
- 8: Solargenerator, Windgenerator, Generator allgemein
- 10: Kraftfahrzeug(batterie)
- 12: Umrichter
- 14: PFC-Einheit
- 16: Haushalt
- 18: Zwischenkreiskondensator
- 20: bauliche Einheit, Funktionseinheit
- 22: Stromzähler
- 24: AC/DC- oder DC/DC-Konverter
- 42: Gleichrichtereinheit
- 44: Inverter
- 45: Block mit passiven Bauelementen
- 52, 54, 56, 58: Schließer- und Öffnerkontakte

- 62, 78: DC/DC Wandler
- 64, 66: passive Schaltungselemente wie Gyratoren
- 70: kabellose Datenverbindungseinheit
- 72, 74: Resonatorblock

## Patentansprüche

1. Ladeanordnung (1) für Kraftfahrzeuge (10) mit einer ersten Energiequelle, die als Stromnetz (2) ausgebildet ist, und mit einer ersten Ladeeinrichtung (4) welche mit dem zu ladenden Fahrzeug verbindbar ist, um dieses elektrisch zu laden, wobei wenigstens zeitweise ein elektrischer Stromfluss von dem Stromnetz zu der Ladeeinrichtung (4) möglich ist, wobei die Ladeanordnung weiterhin eine Umrichtereinheit (12) aufweist, welche dazu geeignet ist, eine Wechselspannung in eine Gleichspannung umzurichten und die Umrichtereinheit (12) eine Leistungsfaktorkorrektureinrichtung (PFC) (14) aufweist, wobei an einer DC-Seite des Umrichters (12) ein Zwischenkreiskondensator angeschlossen ist und wobei die Zwischenkreisspannung des Zwischenkreiskondensators (18) die Eingangsspannung für die Ladeeinrichtung (4) darstellt und die Ladeanordnung eine weitere Energiequelle (8) aufweist, welche dazu geeignet und bestimmt ist, wenigstens zeitweise das Fahrzeug (10) zu laden, wobei die weitere Energiequelle einen Solargenerator aufweist, welcher zumindest teilweise in elektrischer Verbindung mit der Umrichtereinheit (12) steht, so dass die Umrichtereinheit (12), die für Solaranlagen benötigt wird, auch zum Laden des Kraftfahrzeugs und zum Leiten von elektrischen Strömen zwischen dem Kraftfahrzeug und der ersten Energiequelle verwendet wird, so dass eine leistungselektronische Schaltungstopologie der Leistungsfaktorkorrekturschaltung (14) gleichzeitig als Teil eines Solarwechselrichters genutzt wird,
**dadurch gekennzeichnet, dass**
der Solargenerator (8) ohne DC/DC-Converter an den Zwischenkreiskondensator (18) angeschlossen ist und eine Maximum Power Point Regelung des Solargenerators durch eine variable Zwischenkreisspannung gewährleistet wird,
wobei ein Rückfluss eines Stromes aus dem Zwischenkreis in den Solargenerator verhindert wird.

2. Ladeanordnung (1) nach Anspruch 1,
**dadurch gekennzeichnet, dass**
die weitere Energiequelle einen Windkraftgenerator aufweist.

3. Ladeanordnung nach wenigstens einem der vorangegangenen Ansprüche,
**dadurch gekennzeichnet, dass**
die Leistungsfaktorkorrektureinrichtung rückspeisefähig ist.

4. Ladeanordnung nach wenigstens einem der vorangegangenen Ansprüche,
**dadurch gekennzeichnet, dass**
die Ladeanordnung einen elektrischen Abnehmer aufweist.

5. Ladeanordnung nach wenigstens einem der vorangegangenen Ansprüche,
**dadurch gekennzeichnet, dass**
die Umrichtereinheit (12) auch in elektrischer Verbindung mit dem Stromnetz (2) steht um eine Rückspeisung von elektrischer Energie von der weiteren Energiequelle (8) und/oder von dem Kraftfahrzeug (10) in das Stromnetz zu ermöglichen.

6. Ladeanordnung nach wenigstens einem der vorangegangenen Ansprüche,
**dadurch gekennzeichnet, dass**
die Ladeanordnung eine Steuerungseinrichtung aufweist, welche Ströme zwischen dem Kraftfahrzeug, dem Stromnetz und dem Abnehmer und der weiteren Energiequelle steuert und/oder regelt.

7. Ladeanordnung nach wenigstens einem der vorangegangenen Ansprüche,
**dadurch gekennzeichnet, dass**
die Ladeanordnung einen Gleichspannungswandler aufweist.

8. Verfahren zum Betreiben einer Ladeanordnung für Kraftfahrzeuge (10) nach Anspruch 1.

## Claims

1. Charging arrangement (1) for motor vehicles (10) having a first energy source which is designed as a power grid (2) and having a first charging device (4) which can be connected to the vehicle to be charged in order to charge it electrically, wherein an electric current flow from the power grid to the charging device (4) being possible at least at times, wherein the charging arrangement furthermore having a converter unit (12) which is suitable for converting an AC voltage into a DC voltage and the converter unit (12) has a power factor correction device (PFC) (14), wherein an intermediate circuit capacitor is connected to a DC side of the converter (12) and wherein the intermediate circuit voltage of the intermediate circuit capacitor (18) represents the input voltage for the charging device (4) and the charging arrangement has a further energy source (8), which is suitable and intended for at least temporarily charging the vehicle (10), wherein the further energy source comprises a solar generator which is at least partially in electrical connection with the converter unit (12), so that the converter unit (12), which is required for solar systems, is also used for charging the motor vehicle and for conducting electrical currents between the motor vehicle and the first energy source, so that a power electronic circuit topology of the power factor correction circuit (14) is simultaneously used as part of a solar inverter,
**characterized in that**
the solar generator (8) is connected to the intermediate circuit capacitor (18) without a DC/DC converter and maximum power point control of the solar generator is ensured by a variable DC link voltage,
wherein backflow of a current from the intermediate circuit into the solar generator is prevented.

2. Charging arrangement (1) according to claim 1,
**characterized in that**
the additional energy source has a wind power generator.

3. Charging arrangement according to at least one of the preceding claims,
**characterized in that**
the power factor correction device is regenerative.

4. Charging arrangement according to at least one of the preceding claims,
**characterized in that**
the charging arrangement has an electrical consumer.

5. Charging arrangement according to at least one of the preceding claims,
**characterized in that**
the converter unit (12) is also electrically connected to the power grid (2) in order to enable electrical energy to be fed back into the power grid from the further energy source (8) and/or from the motor vehicle (10).

6. Charging arrangement according to at least one of the preceding claims,
**characterized in that**
the charging arrangement has a control device which controls and/or regulates currents between the motor vehicle, the power grid and the consumer and the further energy source.

7. Charging arrangement according to at least one of the preceding claims,
**characterized in that**
the charging arrangement has a DC/DC converter.

8. Method for operating a charging arrangement for motor vehicles (10) according to claim 1.

## Revendications

1. Ensemble de charge (1) pour des véhicules à moteur (10) avec une première source d'énergie, qui est réalisée en tant que réseau électrique (2), et avec un premier dispositif de charge (4) lequel peut être relié au véhicule à charger, afin de charger celui-ci électriquement, dans lequel un flux de courant électrique à partir du réseau électrique vers le dispositif de charge (4) est possible au moins par intermittence, dans lequel l'ensemble de charge présente en outre une unité de convertisseur (12), laquelle est adaptée pour convertir une tension alternative en une tension continue et l'unité de convertisseur (12) présente un dispositif de correction de facteur de puissance (PFC) (14), dans lequel un condensateur de circuit intermédiaire est raccordé à un côté CC du convertisseur (12) et dans lequel la tension de circuit intermédiaire du condensateur de circuit intermédiaire (18) représente la tension d'entrée pour le dispositif de charge (4) et l'ensemble de charge présente une autre source d'énergie (8), laquelle est adaptée pour et destinée à charger le véhicule (10) au moins par intermittence, dans lequel l'autre source d'énergie présente un générateur solaire, lequel est au moins en partie en liaison électrique avec l'unité de convertisseur (12), de sorte que l'unité de convertisseur (12), qui est nécessaire à des installations solaires, est également utilisée pour charger le véhicule à moteur et pour conduire des courants électriques entre le véhicule à moteur et la première source d'énergie, de sorte qu'une topologie de circuit électronique de puissance du circuit de correction de facteur de puissance (14) est exploitée simultanément comme partie d'un onduleur solaire,
**caractérisé en ce que**
le générateur solaire (8) est raccordé au condensateur de circuit intermédiaire (18) sans convertisseur CC/CC et une régulation de point maximal de puissance du générateur solaire est garantie par une tension de circuit intermédiaire variable,
dans lequel un retour d'un courant à partir du circuit intermédiaire dans le générateur solaire est empêché.

2. Ensemble de charge (1) selon la revendication 1,
**caractérisé en ce que**
l'autre source d'énergie présente un générateur d'éolienne.

3. Ensemble de charge selon au moins l'une des revendications précédentes,
**caractérisé en ce que**
le dispositif de correction de facteur de puissance est apte à une alimentation de retour.

4. Ensemble de charge selon au moins l'une des revendications précédentes,
**caractérisé en ce que**
l'ensemble de charge présente un consommateur électrique.

5. Ensemble de charge selon au moins l'une des revendications précédentes,
**caractérisé en ce que**
l'unité de convertisseur (12) est également en liaison électrique avec le réseau électrique (2) pour permettre une alimentation de retour d'énergie électrique à partir de l'autre source d'énergie (8) et/ou à partir du véhicule à moteur (10) dans le réseau électrique.

6. Ensemble de charge selon au moins l'une des revendications précédentes,
**caractérisé en ce que**
l'ensemble de charge présente un dispositif de commande, lequel commande et/ou régule des courants entre le véhicule à moteur, le réseau électrique et le consommateur et l'autre source d'énergie.

7. Ensemble de charge selon au moins l'une des revendications précédentes,
**caractérisé en ce que**
l'ensemble de charge présente un convertisseur continu-continu.

8. Procédé pour faire fonctionner un ensemble de charge pour véhicules à moteur (10) selon la revendication 1.
